# EUROPÄISCHE PATENTSCHRIFT

(11) **EP 2 802 428 B1**
(45) Veröffentlichungstag und Bekanntmachung des Hinweises auf die Patenterteilung: **14.09.2016**
(21) Anmeldenummer: 13702732.2
(22) Anmeldetag: 11.01.2013
(51) Int. Cl.: B22D 17/22, B29C 45/23, B29C 45/28, B29C 33/40, B29C 33/00

(54) **STOPFEN FÜR EINE ANGUSSÖFFNUNG EINER GUSSFORM**
STOPPER FOR A SPRUE OF A CASTING MOULD
BOUCHON POUR ORIFICE D'INJECTION D'UN MOULE

(30) Priorität: 11.01.2012 DE 102012000354
(43) Veröffentlichungstag der Anmeldung: 19.11.2014
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Sasse, Stefan
(86) Internationale Anmeldenummer: PCT/EP2013/000072
(87) Internationale Veröffentlichungsnummer: WO 2013/104547

(56) Entgegenhaltungen:
- DE-A1- 2 129 505

## Beschreibung

Die vorliegende Erfindung betrifft einen Stopfen für eine Angussöffnung einer Gussform und ein Verfahren unter seiner Verwendung.

Historisch wurden in Gussformen die sogenannten Angüsse zunächst immer so orientiert, dass diese Eingießöffnungen von oben in die Gussform hineinführten, so dass sich Gussmaterial wie zum Beispiel Bronze oder später Gusseisen mittels Tiegeln von oben in die Gussform hineingießen ließ und dann flüssig bis zum Erstarren in der Form stehen blieb. Nicht zuletzt die Erfindung und Entwicklung von Kunststoff veränderte die Technologie des Gießens. Es entwickelten sich Varianten, bei denen das flüssige oder pastöse, also höherviskose Gussmaterial durch Zuleitungen ohne freien Fall (wie beim historischen "Gießen") in den Anguss geleitet wird. Spritzgießen, bei dem das Gussmaterial unter besonders hohem Druck von einer Spritzgussmaschine in die Angussöffnung der Gussform eingeleitet wird, ist hier nur ein besonders bekanntes von vielen Beispielen. Ein anderes Beispiel ist das Einleiten von Kunststoff durch eine Zuleitung in den Anguss irgendeiner Form (Gussform), wobei der Kunststoff aus mindestens zwei flüssigen Komponenten besteht. Diese werden in einer geeigneten Mischvorrichtung vor dem Einleiten so vermischt, dass sich das entstandene flüssige oder pastöse Gemisch vernetzt und in der Gussform "aushärtet". Die zum Einleiten an den Anguss anzukoppelnde Zuleitung ist dann verbreitet eine rohrartige Struktur (Mischer) mit Formelementen in ihrem Innenraum, die hindurchströmendes Gussmaterial verschiedentlich umlenken und so durchmischen. In diesen Mischer hinein führen verbreitet Schlauchleitungen in der Anzahl der Komponenten, aus denen der Kunststoff zusammenzumischen ist. So wird das Vermischen der Komponenten so spät wie möglich vor dem Einleiten in die Gussform gewährleistet. Dies ermöglicht die Verwendung auch von Kunststoff mit kurzer "Topfzeit", der also schon kurze Zeit nach dem Vermischen vernetzt und an Fließfähigkeit (Viskosität) verliert.

Wenn eine Zuleitung abgedichtet an den Anguss anschließt, ist das Orientieren der Angüsse von oben in die Gussformen hinein logischerweise nicht erforderlich, weil durch die Abdichtung jedenfalls verhindert wird, dass das eingeleitete Gussmaterial zurück nach draußen fließt.

Nach dem Einleiten des Gussmaterials in eine Gussform sollte die Zuleitung aber möglichst bald vom Anguss abgekoppelt werden können, um sie zum Beispiel für eine nächste Zuleitungsprozedur wieder zur Verfügung zu haben.

Das Ausfließen von noch nicht ausgehärtetem Gussmaterial aus der Gussform hinaus, das insbesondere nach dem Einleiten von Gussmaterial bei abgenommener Zuleitung und damit offenem Anguss droht, ist wiederum wegen so verursachter Verschmutzung und Materialverlust nachteilig.

Die DE 2129505 A1 offenbart einen Verschluss, nämlich das Blöckchen 45, für eine Angussöffnung 38 einer Gussform.

Der vorliegenden Erfindung liegt die Aufgabe zu Grunde, ein Gießverfahren sowie Hilfsmittel dazu zu schaffen, die die Effizienz des Gießverfahrens optimieren.

Diese Aufgabe wird von einem Stopfen mit den Merkmalen des Anspruchs 1 und von einem Verfahren mit den Merkmalen des Anspruchs 10 gelöst. Bevorzugte Ausgestaltungen sind in den Unteransprüchen angegeben.

Erfindungsgemäß ist ein Stopfen für eine Angussöffnung einer Gussform, der einen Durchgang zum Einleiten von Gussmaterial in die Angussöffnung der Gussform aufweist. Erfindungsgemäß ist dieser Stopfen weiter so ausgebildet, dass er den Durchgang gegen Ausfließen von Gussmaterial zurück aus der Gussform hinaus selbsttätig schließt. Zum Beispiel ist dieser Stopfen so ausgebildet, dass er den Durchgang selbsttätig schließt, wenn zwischen dem Innenraum der Gussform und einer Umgebung der Gussform ein Druckgefälle herrscht, das das Gussmaterial aus dem Anguss hinausdrückt.

Dieses selbsttätige Schließen gegen ein Ausfließen aus der Gussform vermeidet insbesondere nach dem Einleiten von Gussmaterial Verschmutzung und Materialverlust, die durch das Ausfließen von noch nicht ausgehärtetem Gussmaterial verursacht würden, sobald nämlich zum Beispiel eine den Anguss zunächst abdichtende Zuleitung vom Anguss abgenommen wird. Zum Beispiel wenn der Anguss nicht von oben in die Gussformen hinein orientiert ist sondern irgendwie seitlich oder von unten, verhindert der erfindungsgemäße Stopfen, dass das Gussmaterial der Gravitationskraft folgend ausfließt - ermöglicht aber weiterhin das Einleiten des Gussmaterials, weil er nur gegen das Ausfließen selbsttätig schließt.

So kann nach dem Einleiten des Gussmaterials in die Gussform erfindungsgemäß vorteilhaft die Zuleitung vom Anguss, der mit dem erfindungsgemäßen Stopfen versehen ist, sofort abgekoppelt werden, um sie zum Beispiel für eine nächste Zuleitungsprozedur wieder zur Verfügung zu haben.

Damit das Anschließen einer Zuleitung für das Gussmaterial erleichtert wird, kann der Stopfen ein Anschlussprofil aufweisen, das zum Anschließen einer Gussmaterial-Zuleitung ausgebildet ist. Vorzugsweise ist dieses Profil an einer nach außerhalb der Gussform weisenden Seite des Stopfens angeordnet, wenn dieser in eine Gussform eingesetzt ist, und besonders bevorzugt im Durchgang. Dort können zum Beispiel radial umfänglich verlaufende Nuten komplementär zu radial umfänglich verlaufenden Stegen auf einer so also passend geformten Spitze eines Mischers ausgebildet sein, der dann systematisch zu diesem Anschlussprofil passt.

Zum Einsetzen in den Anguss einer Gussform weist der Stopfen vorzugsweise eine Montagevorrichtung auf, mittels der sich der Stopfen in der Angussöffnung der Gussform lösbar befestigen lässt. Auch die Gussform, für deren Anguss der erfindungsgemäße Stopfen vorgesehen ist, kann Strukturen aufweisen, durch die sie für das Einsetzen angepasst ist.

Die erfindungsgemäße Ausbildung des Stopfens so, dass er den Durchgang gegen Ausfließen von Gussmaterial zurück aus der Gussform hinaus selbsttätig schließt, ist erfindungsgemäß zum Beispiel und vorzugsweise durch erreicht, dass der Stopfen einen Stopfenkörper aus elastischem Werkstoff, insbesondere Elastomer wie zum Beispiel EPDM oder Vulkollan® der Firma Bayer® aufweist, der sich unter dem Druck des Gussmaterials beim Einleiten durch den Durchgang in die Angussöffnung der Gussform elastisch verformt und dabei einen Verschluss im Durchgang in die Angussöffnung öffnet, während der Verschluss bei unverformtem Körper verschlossen ist. Dazu weist der Verschluss vorzugsweise einen oder mehrere Schlitz auf, deren Wandungen im unverformten Zustand des Stopfenkörpers auf einander liegen und den Durchgang verschließen. Es sind aber auch andere "Rückschlagventilarten" wie zum Beispiel Kugelventile praktikabel und erfindungsgemäß ausführbar.

Der Schlitz ist vorzugsweise eben, er kann aber auch zum Beispiel gezackt oder gewellt sein. Mehrere Schlitze sind vorzugsweise um eine (gedachte) Achse um gleiche Winkel zueinander verdreht.

Erfindungsgemäß ist auch ein Verfahren zum Füllen einer Gussform mit Gussmaterial, Bei diesem Verfahren wird zunächst ein erfindungsgemäßer Stopfen der soweit beschriebenen Art in eine Angussöffnung einer Gussform eingesetzt und anschließend Gussmaterial in den Durchgang eingeleitet.

Diese und weitere Vorteile und Merkmale der Erfindung werden anhand der folgenden Abbildungen von Ausführungsbeispielen der Erfindung weiter beschrieben. Darin zeigen
- Fig. 1: eine räumliche Ansicht eines erfindungsgemäßen Stopfens,
- Fig. 2: eine Seitenansicht des Stopfens nach Fig. 1,
- Fig. 3: die Seitenansicht nach Fig. 2 des Stopfens geschnitten,
- Fig. 4: die geschnittene Seitenansicht nach Fig. 3 des Stopfens eingesetzt in den Anguss einer Gussform,
- Fig. 5: eine geschnittene räumliche Ansicht der Anordnung nach Fig. 4 mit Blickrichtung von außerhalb der Gussform und
- Fig. 6: eine andere geschnittene räumliche Ansicht der Anordnung nach Fig. 4 mit Blickrichtung entgegengesetzt zu der in Fig. 5 von innerhalb der Gussform.

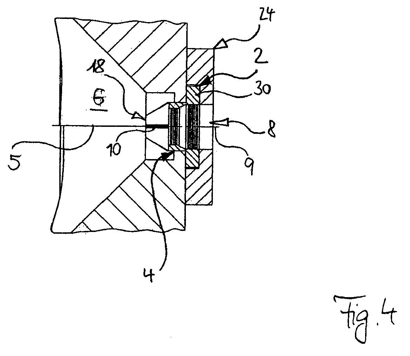

In allen Figuren ist ein Stopfen für eine Angussöffnung 4 in der Schnittebene 5 einer Gussform 6 (Fig. 4 bis 6) abgebildet. Von der (angeschnitten dargestellten) Gussform 6 ist nur ein kegelförmiges Teilvolumen 6 sichtbar.

Der Stopfen weist einen Durchgang 8 zum Einleiten von Gussmaterial (nicht dargestellt) in die Angussöffnung 4 der Gussform 6 auf. Der Stopfen ist um die Achse 9 rotationssymmetrisch ausgebildet.

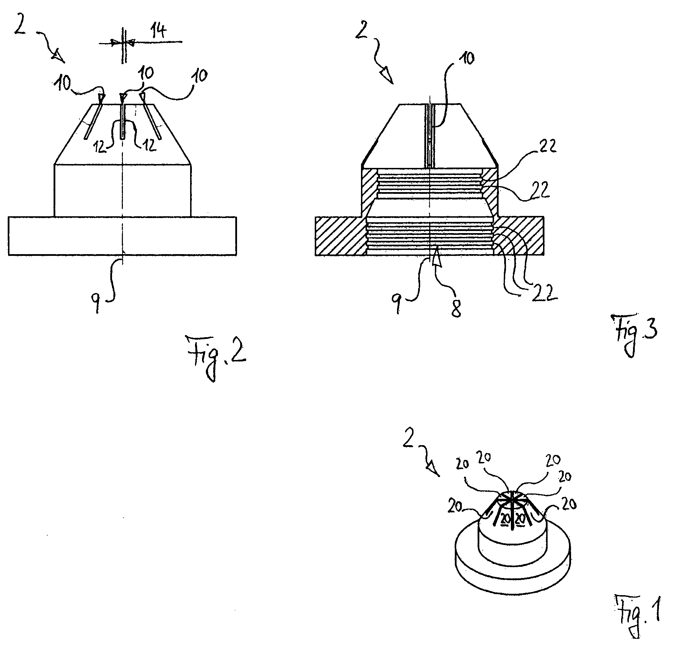

Erfindungsgemäß ist dieser Stopfen so ausgebildet, dass er den Durchgang 8 gegen Ausfließen von Gussmaterial zurück aus der Gussform hinaus selbsttätig schließt. Dazu besteht der Stopfen aus einem Stopfenkörper 2 aus elastischem Werkstoff, der sich unter dem Druck des Gussmaterials (nicht dargestellt) beim Einleiten durch den Durchgang 8 in die Angussöffnung 4 der Gussform 6 (Fig. 4) elastisch verformt (nicht dargestellt) und dabei einen Verschluss 10 im Durchgang 8 öffnet, während der Verschluss 10 bei unverformtem Körper verschlossen ist. Dazu weist der Verschluss vier Schlitze 10 auf (Fig. 1), deren Wandungen 12 (Fig. 2) im unverformten Zustand des Stopfenkörpers 2 auf einander liegen (in den Figuren sind der Schlitze 10 zur Erkennbarkeit der Wandungen 12 mit einer gewissen Weite 14 dargestellt) und den Durchgang 8 verschließen. Die Schlitze 10 sind eben und um die Symmetrieachse 9 des Stopfens um 45° zueinander verdreht.

Im unverformten Zustand des Stopfenkörpers (gemäß allen Figuren) erstrecken sich alle vier Schlitze 10 radial bezüglich der Durchflussrichtung 9 (identisch mit der Symmetrieachse 9) durch das Ende 18 des Stopfenkörpers 2, das in die Gussform 6 hinein ragt (Fig. 4) und in das der Durchgang in Richtung der Gussform 6 mündet (Fig. 4), hindurch und axial von dem Ende 18 in den Durchgang 8 hinein.

Unter dem Druck eines eingeleiteten Gussmaterials (nicht dargestellt) spreizen sich die acht tortenstückförmigen Enden 20 (Fig. 1), in die die vier Schlitze 10 das Ende 18 teilen, radial nach außen auf und geben im Bereich der mittigen Symmetrieachse 9 den Durchgang 8 somit nun über die gesamte Länge des Stopfens frei.

Damit das Anschließen einer Zuleitung (nicht dargestellt) für das Gussmaterial (nicht dargestellt) erleichtert wird, weist der Stopfen ein Anschlussprofil 22 auf (Fig. 3), das zum Anschließen einer Gussmaterial-Zuleitung ausgebildet ist. Dieses Profil am nach außerhalb der Gussform 6 weisenden Ende im Durchgang 8 angeordnet, wenn dieser in eine Gussform 6 eingesetzt ist (Fig. 4). Dort sind radial umfänglich verlaufende Nuten 22 komplementär zu radial umfänglich verlaufenden Stegen (nicht dargestellt) auf einer so also passend geformten Spitze eines Mischers (nicht dargestellt) ausgebildet, der dann also systematisch zu diesem Anschlussprofil passt.

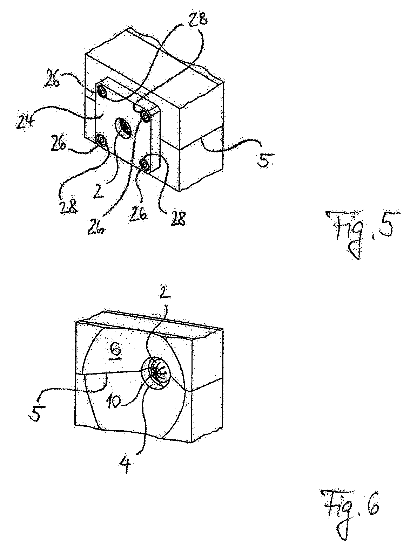

Zum Einsetzen in den Anguss 4 einer Gussform 6 weist der Stopfen eine Montagevorrichtung 24 auf (Fig. 4 und 5), mittels der sich der Stopfen 2 in der Angussöffnung 4 der Gussform 6 durch vier Schrauben 26 lösbar befestigen lässt. Auch die Gussform 6, für deren Anguss 6 der Stopfen vorgesehen ist, weist dazu Strukturen 28 auf, nämlich Bohrungen 28, durch die die Gussform 6 für das Einsetzen und lösbare Befestigen des Stopfens angepasst ist. Die Montagevorrichtung 24 ist ein Überwurfkragen 24, der einen Flanschkragen 30 am Stopfenkörper 2 übergreift (Fig. 4) und ränddicht in die Angussöffnung 4 drückt. Die Vorrichtung 24 hält den Stopfenkörper 2 fest und entlang seines Randes dicht in der Angussöffnung 4 und ist an den vier Schrauben 26 dennoch schnell lösbar.

Um die schnelle Auswechselbarkeit des Stopfens noch zu beschleunigen (zum Beispiel wenn dieser als "Wegwerfartikel" konzipiert und nach ein- oder mehrmaliger Verwendung auszutauschen ist), kann ein alternativer "Überwurfkragen" (nicht dargestellt) auch mittels eines Scharniergelenks (nicht dargestellt) an der Gussform 6 angelenkt sein, und ist dann sogar nur noch mit zum Beispiel einer oder zwei Schrauben in der Funktionsposition (im Übrigen entsprechend der abgebildeten Position des Überwurfkragens 24) zu befestigen, um seine Andrück- und Haltefunktion sicher zu gewährleisten.

## Patentansprüche

1. Stopfen für eine Angussöffnung (4) einer Gussform (6), der einen Durchgang (8) zum Einleiten von Gussmaterial in die Angussöffnung der Gussform aufweist und der so ausgebildet ist, dass er den Durchgang gegen Ausfließen von Gussmaterial aus der Gussform hinaus selbsttätig schließt.

2. Stopfen nach Anspruch 1, **gekennzeichnet durch** ein Anschlussprofil (22), das in dem Durchgang (8) zum Anschließen einer Gussmaterial-Zuleitung ausgebildet ist.

3. Stopfen nach einem der vorhergehenden Ansprüche, **dadurch gekennzeichnet, dass** der Stopfen einen Stopfenkörper (2) aus elastischem Werkstoff aufweist, der sich unter dem Druck des Gussmaterials beim Einleiten durch den Durchgang (8) in die Angussöffnung (4) der Gussform (6) elastisch verformt und dabei einen Verschluss (10) im Durchgang in die Angussöffnung öffnet.

4. Stopfen nach Anspruch 3, **dadurch gekennzeichnet, dass** der Verschluss (10) mindestens einen Schlitz (10) aufweist, dessen Wandungen im unverformten Zustand des Stopfenkörpers auf einander liegen und den Durchgang (8) verschließen.

5. Stopfen nach Anspruch 4, **dadurch gekennzeichnet, dass** der Schlitz (10) im unverformten Zustand des Stopfenkörpers (2) radial bezüglich der Durchflussrichtung (9) durch den Durchgang sich durch ein Ende des Stopfenkörpers, in das der Durchgang (8) mündet, hindurch erstreckt und axial (9) sich in den Durchgang hinein erstreckt.

6. Stopfen nach einem der Ansprüche 4 oder 5, **gekennzeichnet durch** einen oder mehrere Schlitze (10), die um eine Achse (9) um gleiche Winkel zueinander verdreht sind.

7. Stopfen nach einem der Ansprüche 4 bis 6, **dadurch gekennzeichnet, dass** der Schlitz (10) eben ist.

8. Stopfen nach einem der Ansprüche 4 bis 7, **dadurch gekennzeichnet, dass** der Stopfenkörper (2) oder der Stopfen rotationssymmetrisch ist.

9. Stopfen nach einem der vorhergehenden Ansprüche, **gekennzeichnet durch** eine Montagevorrichtung (24), mittels der sich der Stopfen in der Angussöffnung (4) der Gussform (6) lösbar befestigen lässt.

10. Verfahren zum Füllen einer Gussform (6) mit Gussmaterial mit den Schritten:
- Einsetzen eines Stopfens mit einem Durchgang (8) nach einem der vorhergehenden Ansprüche in eine Angussöffnung (4) einer Gussform und dann
- Einleiten von Gussmaterial in den Durchgang (8).

## Claims

1. A stopper (2) for a sprue (4) of a casting mould (6), which has a through-passage (8) for introducing casting material into the sprue of the casting mould and which is designed such that it automatically closes the through-passage against the flow of casting material out of the casting mould.

2. The stopper according to claim 1, **characterized by** a connection profile (22), which is designed in the through-passage (8) for the connection of a casting material feed line.

3. The stopper according to one of the previous claims, **characterized in that** the stopper has a stopper body (2) made of an elastic material, which is deformed elastically under the pressure of the casting material during introduction through the through-passage (8) into the sprue (4) of the casting mould (6) and thereby opens a closure (10) in the through-passage into the sprue.

4. The stopper according to claim 3, **characterized in that** the closure (10) has at least a slit (10), the walls of which lie on each other in the undeformed state of the stopper body and close the through-passage (8).

5. The stopper according to claim 4, **characterized in that** the slit (10) in the undeformed state of the stopper body (2) extends radially with respect to the direction of flow (9) through the through-passage through one end of the stopper body, into which the through-passage (8) flows, and extends axially (9) into the through-passage.

6. The stopper according to claims 4 or 5, **characterized by** one or more slits (10), which are turned towards each other around an axis (9) by the same angle.

7. The stopper according to claims 4 to 6, **characterized in that** the slit (10) is straight.

8. The stopper according to claims 4 to 7, **characterized in that** the stopper body (2) or the stopper (2) is rotationally symmetrical.

9. The stopper according to one of the previous claims, **characterized by** an installation device (24), by means of which the stopper can be releasably fastened in the sprue (4) of the casting mould (6).

10. A method for filling a casting mould (6) with casting material, having the steps of:
- inserting a stopper with a through-passage (8) according to one of the previous claims into a sprue (4) of a casting mould and then
- introducing casting material into the through-passage (8).

## Revendications

1. Bouchon pour un orifice d'injection (4) d'un moule (6) comportant un passage (8) pour l'introduction de matériau de fonte dans l'orifice d'injection du moule et formé de manière à fermer automatiquement le passage pour empêcher l'écoulement de matériau de fonte du moule.

2. Bouchon selon la revendication 1, **caractérisé par** un profil de raccordement (22) formé dans le passage (8) pour le raccordement d'une conduite d'alimentation en matériau de fonte.

3. Bouchon selon l'une quelconque des revendications précédentes, **caractérisé en ce que** le bouchon comporte un corps de bouchon (2) en matériau élastique qui se déforme élastiquement sous la pression du matériau de fonte lors de l'introduction à travers le passage (8) dans l'orifice d'injection (4) du moule (6) et, ce faisant, ouvre une fermeture (10) dans le passage dans l'orifice d'injection.

4. Bouchon selon la revendication 3, **caractérisé en ce que** la fermeture (10) comporte au moins une fente (10) dont les parois sont disposées l'une au-dessus de l'autre à l'état non déformé du corps de bouchon et ferment le passage (8).

5. Bouchon selon la revendication 4, **caractérisé en ce que** la fente (10), à l'état non déformé du corps de bouchon (2), s'étend radialement par rapport au sens d'écoulement (9) à travers le passage à travers une extrémité du corps de bouchon dans lequel débouche le passage (8), et s'étend axialement (9) dans le passage.

6. Bouchon selon l'une quelconque des revendications 4 ou 5, **caractérisé par** une ou plusieurs fentes (10) tournées l'une vers l'autre à angles égaux autour d'un axe (9).

7. Bouchon selon l'une quelconque des revendications 4 à 6, **caractérisé en ce que** la fente (10) est plane.

8. Bouchon selon l'une quelconque des revendications 4 à 7, **caractérisé en ce que** le corps de bouchon (2) ou le bouchon est symétrique en rotation.

9. Bouchon selon l'une quelconque des revendications précédentes, **caractérisé par** un dispositif de montage (24) au moyen duquel le bouchon peut être fixé de manière détachable dans l'orifice d'injection (4) du moule (6).

10. Procédé de remplissage d'un moule (6) avec du matériau de fonte, comprenant les étapes suivantes :
- insertion d'un bouchon présentant un passage (8) selon l'une quelconque des revendications précédentes dans un orifice d'injection (4) d'un moule, et puis
- introduction de matériau de fonte dans le passage (8).
